# EUROPEAN PATENT APPLICATION

(11) **EP 3 229 220 A1**
(43) Date of publication of application: **11.10.2017**
(21) Application number: 16164383.8
(22) Date of filing: 08.04.2016
(51) Int. Cl.: G09B 9/44, G09B 19/16, G09B 9/16, G09B 9/30

(54) **FLIGHT SCHOOL EQUIPMENT**

(71) Applicant: Airbus Defence and Space GmbH, 82024 Taufkirchen (DE)
(72) Inventor: Heinzinger, Olaf, 80636 München (DE); Fernandes de Oliveira, Rafael, 81675 München (DE); Oberhauser, Matthias, 81379 München (DE); Dreyer, Daniel, 85411 Hohenkammer (DE); Mamessier, Sébastien, 78960 Voisins le Bretonneux (FR)
(74) Representative: Kastel, Stefan

(57) **Abstract**

In order to save flight time and resources of a flight school, the invention provides a flight school equipment, comprising:
at least one data processing device ,
an aircraft for conducting a real training flight wherein a real flight data ac-quisition device for acquiring real flight data during the real training flight is arranged on the aircraft,
at least one student user interface device having a student user interface to be used by a flight student wherein the student user interface device is configured at least for providing information to the student,
at least one trainer user interface device having a trainer user interface to be used by a trainer wherein the trainer user interface device is at least configured for providing information to the trainer,
at least one student monitoring device for acquiring health and/or movement parameter data of the student during the real training flight.

## Description

The invention relates to a flight school equipment including an aircraft for conducting training flights for new or already active pilots.

Existing flight schools are equipped with one or several aircraft in order to conduct training flights wherein a trainer guides a student through several training sessions such as starting, aircraft control during different flight conditions and landing. The success of the training session heavily depends on the skills, experience and thoughtfulness of the trainer. Often, individual skills and weaknesses of students are not considered appropriately. In effect, a lot of training flights have to be conducted to ensure the quality of training.

The problem to be solved by the invention is to provide a flight school equipment which reduces the overall training flight time and, hence, saves energy and resources.

This problem is solved by a training flight equipment as indicated in claim 1. Advantageous embodiments form the subject matter of the dependent claims.

The invention provides a flight school equipment, comprising: at least one data processing device, an aircraft for conducting a real training flight wherein a real flight data acquisition device for acquiring real flight data during the real training flight is arranged on the aircraft, at least one student user interface device having a student user interface to be used by a flight student wherein the student user interface device is configured at least for providing information to the student, at least one trainer user interface device having a trainer user interface to be used by a trainer wherein the trainer user interface device is configured for providing information to the trainer and optionally for a data input by the trainer, at least one student monitoring device for acquiring health and/or movement parameter data of the student during the real training flight, at least one data recorder for recording real flight data, training data, and health and/or movement parameter data of the student, and a data communication network for connecting the data processing device, the real flight data acquisition device, the student user interface device, the trainer user interface device, the student monitoring device, and the data recorder at least part time in order to enable a data exchange.

This equipment allows measuring of the training success both by acquiring flight data, especially from several flight sensors, and student monitoring data by a student monitoring device. By correlating this data, it is possible to automatically determine the actual skills of the students and to take the appropriate measures to enhance these skills.

An advantageous embodiment of the flight school equipment is characterized by a flight simulator for conducting a simulated training flight wherein the flight simulator includes a simulator flight data acquisition device in order to acquire simulator flight data during the simulator training flight wherein the at least one data recorder is configured to record the simulator flight data acquired by the simulator flight data acquisition device.

It is preferred that a cloud based database is connected to the data communication network in order to store recorded flight data and training data for the student.

An advantageous embodiment of the flight school equipment is characterized by an analysis unit connected to the data communication network in order to receive the flight data and the health and/or movement parameter data for analysing the behaviour of the student during a training flight, wherein the analysing unit is configured to compare the flight data and the health and/or movement parameter data with predetermined reference data in order to determine a grade for the training success.

An advantageous embodiment of the flight school equipment is characterized by a selection unit configured to select a next training session among a set of predetermined training sessions in response to the grade for the training success and in response to training data of the student and to provide information about the selected next training session via the student user interface and/or the trainer user interface.

It is preferred that the real data acquisition device includes one or several flight sensors chosen from the group of sensors that consists of an aircraft position sensor, an aircraft latitude sensor, an aircraft longitude sensor, an aircraft altitude sensor, an aircraft state sensor, a true airspeed sensor, an indicated airspeed sensor, an angle of attack sensor, a roll sensor, a heading sensor, a pilot input sensor, a stick input sensor, a throttle sensor, a flap lever sensor, a pedal position sensor, a lever position sensor, a sensor for determining an interaction with a flight system, and a sensor for determining an interaction with an aircraft instrument.

It is preferred that the aircraft is equipped with at least one video and/or audio recording unit in order to record video data and/or audio data during the real training flight. This video and/or audio recording unit could, for example, be a part of the student monitoring device.

An advantageous embodiment of the flight school equipment is characterized by a data augmenting device configured to augment the real flight data with simultaneously recorded video and/or audio data and/or health and/or movement parameter data.

It is preferred that the student monitoring device includes one or several sensors chosen from the group consisting of a heart beat sensor, a galvanic skin response sensor, an eye tracking sensor, a head mounted eye tracking system, a head movement tracking system, a camera, a set of cameras, a microphone and a body movement tracking system.

It is preferred that the student user interface device includes one terminal device or several of terminal devices chosen from the group consisting of a smartphone, a PDA, a tablet computer, a laptop, a PC, an aircraft integrated communication and/or display device, a head-up display, augmented reality glasses, a headset, a headphone, a loudspeaker, and a microphone.

It is preferred that the trainer user interface device includes a terminal device or several of terminal devices chosen from the group consisting of a smartphone, a PDA, a tablet computer, a laptop, a PC, an aircraft integrated communication device, an aircraft integrated display, a head-up display, augmented reality glasses, a headset, a headphone, a loudspeaker, and a microphone.

It is preferred that the data communication network includes an airborne part network for communication during the training flight and a ground-based part network for communication after the training flight.

Advantageous embodiments of the invention are described in more detail below with reference to the accompanying drawings.
- Fig. 1: is a schematic view of a flight school equipment;
- Fig. 2: is a perspective view of a cockpit of an aircraft of the flight school equipment during a training flight;
- Fig. 3: is a perspective view of a student during the training flight of fig. 2 wherein an embodiment of a student user interface device is shown in more detail;
- Fig. 4: is a block diagram of a possible hardware structure and of a software program structure for the flight school equipment according to one embodiment;
- Fig. 5: is a schematic view of a display of a student user interface or a trainer user interface showing a report about a training session with an analysis of the student's performance during the training flight;
- Fig. 6: is a schematic view of a display of a student user interface showing automatically generated suggestions for next training sessions;
- Fig. 7: is a schematic view of a display or a part of the display of a student user interface in a training session during the training flight;
- Fig. 8: is a block diagram of another software program structure in another embodiment or in another program modus of the flight school equipment.

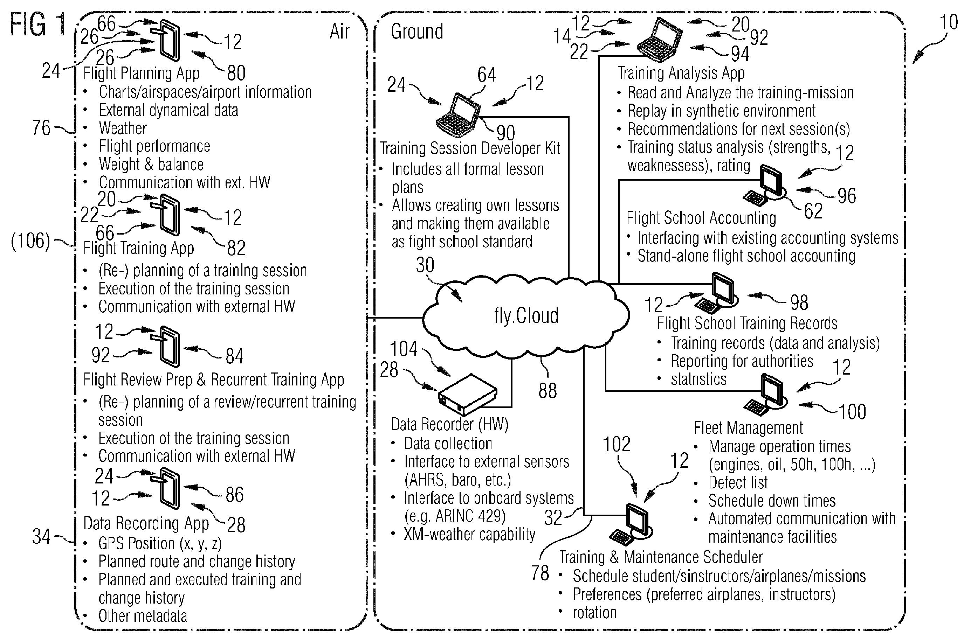

Referring now to Figs. 1 to 4, an embodiment of a flight school equipment is described. The flight school equipment 10 comprises several data processing devices 12, including a central processing unit 14 among them, an aircraft 16 for conducting a real training flight, a student user interface device 20 with a student user interface 22, a trainer user interface device 24 with a trainer user interface 26, a data recorder 28, a central data storage unit 30 and a data communication network 32.

In a preferred embodiment, the aircraft 16 is an airplane 34, and especially an electrically driven airplane 34 such as the Airbus E-Fan airplane, see the explanation in Wikipedia, "e-fan", downloaded on March 29, 2016 from "https://de.wikipe-dia.org/wiki/Airbus_E-Fan". An electric airplane 34 is an advantageous training platform since it reduces local emissions of pollution gases and sound while the maximum flight time is sufficient to train starts, landings and short training flights near the flight school basis. Especially, the aircraft 16 is an aircraft using electric and hybrid power - offering the significantly improved fuel economy and marked reductions in both emissions and noise. In one embodiment, the aircraft 16 is a fully-electric two-seat trainer version airplane powered only by batteries. In another embodiment, the aircraft is a four-seat hybrid-power driven training and general aviation aircraft with its on-board electrical energy supplemented by a combustion engine that recharges the batteries in extending the flight range and endurance. Further embodiments of the aircraft 16 are a hybrid propulsion driven full-scale helicopter.

The aircraft 16 is provided with a real flight data acquisition device 36 for acquiring real flight data during the real training flight. The real flight data acquisition device 36 includes several sensors 38 for determining different flight data such as aircraft position, aircraft status including speed and angles. Further, the real flight data acquisition device may acquire data from different instruments 40 of the aircraft 16.

Further, there is arranged in the aircraft cockpit at least one student monitoring device 42 for acquiring health and/or movement parameter data of the student 44 during the real training flight. This student monitoring device 42 may include one or several cameras 46 forming a video data acquiring unit 48 and one or several microphones 50 forming an audio data acquiring unit 52. Cameras 46 may be part of a body or head movement tracking system 54 tracking movements of the head and/or of other parts of the student 44.

Further, the student monitoring device 42 may include an eye tracking system 56 for tracking eye movements of the student 44.

Still further, the student monitoring device 42 may include at least health monitoring sensor 58 such as a heartbeat sensor und/or a galvanic skin response sensor in order to determine bio parameters indicating the actual stress level of the student 44.

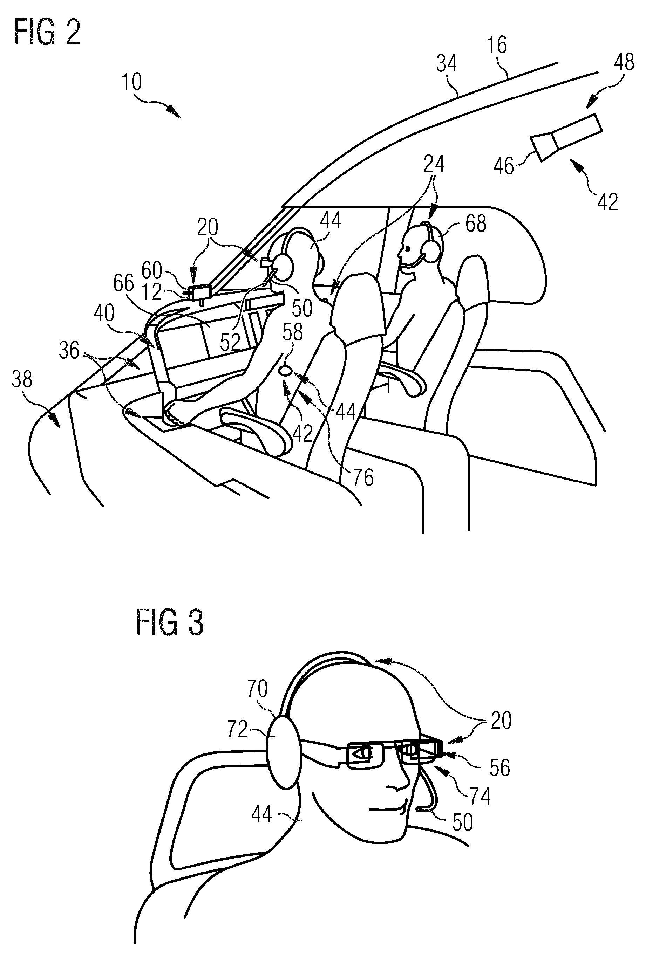

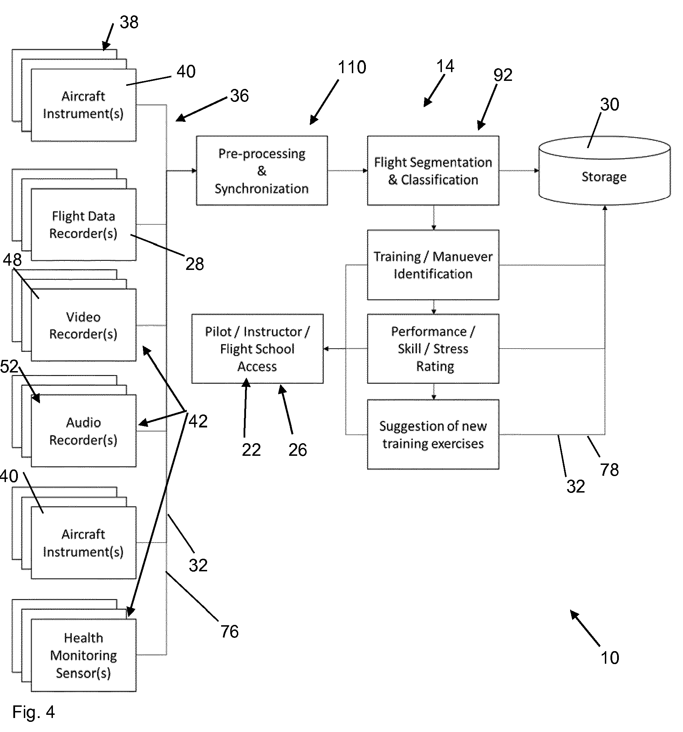

The user interface devices 20, 24 include at least one common user terminal device such as a smartphone 60, a PC 62 (when ground based), a laptop 64, or a tablet computer 66. Especially during flight, the trainer 68 may use a tablet computer 66 equipped with several application software programs, so-called apps, in order to form several devices such as the data recorder 28. For the student, use of one or several of a smartphone 60 and a headset 70 including a headphone 72 and the microphone 50 is advantageous to receive information from the flight training software of the flight school equipment 10 and/or from the trainer 68. As visible in Figs. 3 and 4, the student user interface device 20 may further include augmented reality glasses 74 in order to display the information in a mixed reality environment.

A preferred embodiment for any of the user interface devices 20, 24 is the use of a plug-in computer tablet 66 as the instrument panel's right-hand display. This tablet serves as the Navigation and Training Display, providing information that supplements the aircraft's fixed left-hand Primary Flight Display (PFD). When removed from the cockpit, the computer tablet 66 serves as a highly interactive training device that enables a pilot to plan the upcoming flight in detail.

Once installed in the aircraft 16, the tablet 66 provides strategic information on the planned flight path and/or training lesson, and is easily reprogrammable in response to changing conditions.

The status of available electrical energy is displayed along the e-aircraft's planned flight path, as well as for alternates in the event of in-flight re-routing. Especially preferred is a "plug and play" solution so that the tablet 66 is automatically synchronised with the cockpit's Primary Flight Display after being plugged in, with data seamlessly shared between these two electronic instruments.

After landing, the removable tablet 66 is used to review the flight details with an instructor - allowing for an in-depth debriefing. Information from the tablet is easily uploaded into the flight school's own system for its records, accounting and future training purposes. The data also is available for use in the pilot's logbook and for review after being stored in a personal computer 62.

The data communication network 68 is configured to connect the data processing devices 12, the real flight data acquisition device 36, the student user interface device 20, the trainer user interface device 24, the student monitoring device 42, and the data recorder at least part time in order to enable a data exchange.

As indicated in fig. 1, the data communication network 68 may include an airborne part network 76 configured to connect the devices 12, 20, 24, 36, 42 used on the aircraft 16 during the flight and a ground based 78 part network connecting ground based devices. The part networks 76, 78 may be connected when the aircraft is on the ground, for example by a wireless network connection. Alternatively, the data recorded and/or acquired during flight are stored in one of the airborne data processing devices 12, and this data processing device 12 is subsequently connected to the ground-based network 78 after the training flight. The airborne part network 76 may for example use common short range wireless connections such as Bluetooth connections. The ground-based network 78 may use any wired or wireless connections, especially an internet-based connection.

The data recorder 28 may be realized by software in any of the airborne data processing devices 12, and especially as a data recording app 86 within the trainer's or student's tablet computer 66.

In addition to the data recording app 86, one several, or all of the following further apps are provided within at least one of the airborne data processing devices 12, and especially within the tablet computer 66 to be docked within a docking station in the aircraft cockpit: a flight planning app 80, and a flight training app 82 and a flight review preparation and recurrent training app 84.

The flight planning app 80 is configured to provide
- charts/airspaces/airport information
- external dynamical data
- weather information
- flight performance information
- weight and balance information and
- communication with external hardware.

The flight training app 82 is configured for
- (re-)planning of a training session
- execution of the training session and
- communication to external hardware.

The flight review preparation and recurrent training app 84 is configured for:
- (re-)planning of a review/recurrent training session
- execution of the training session and
- communication with external hardware.

The data recording app 86 is configured to record:
- the GPS position (x, y, z)
- the planned route and change history
- the planned and executed training and change history and
- other metadata.

The ground-based part network 78 includes as central element a cloud database 88 ("fly.cloud") which forms the data storage unit 30. All data may be stored in the database in order to make them available for other devices within the data communication network 32.

Further, the flight school equipment 10 may include one, several or all of the following devices (to be implemented by hardware or software) connected to the ground-based part network 78: a training session developer kit 90, an analysis unit 92, especially implemented as a training analysis app 94 running on a laptop, PC or other data processing device 12, a flight school accounting unit 96, a flight school training records unit 98, a fleet management unit 100, a training and maintenance scheduler 102, and a ground-based data recorder 104, especially implemented as data recorder hardware.

The training session developer kit 90 is configured:
- to include all formal lesson plans and
- allow creating own lessons and making them available as flight school standard.

The analysis unit 92 is configured to:
- read and analyse the training-mission
- replay it in a synthetic environment
- recommend next session(s)
- analyse training status (strengths, weaknesses) and rate the training status.

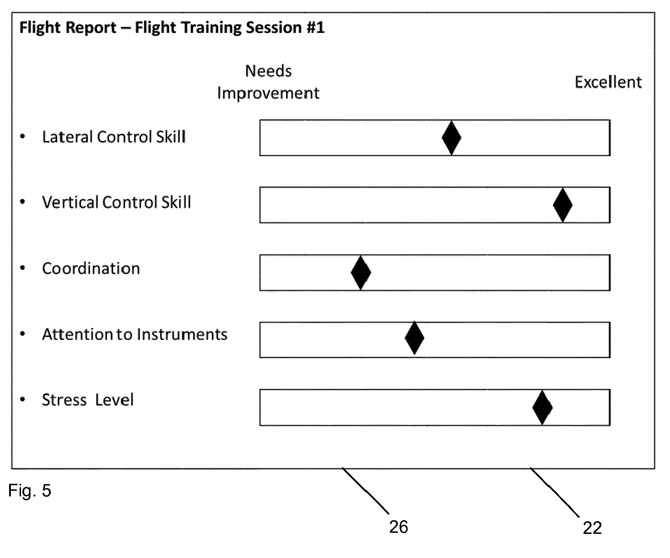

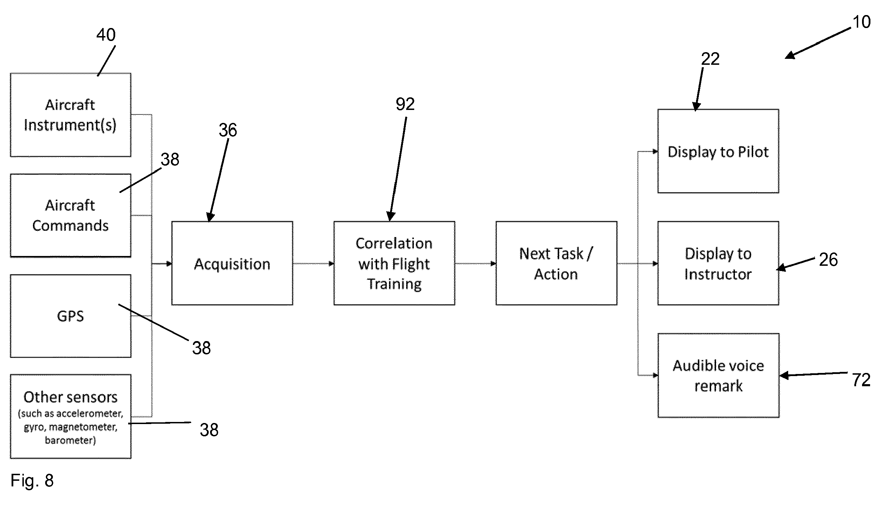

An example of a display indication for a result of a training analysis and rating is shown in fig. 4. An example of a suggestion for next sessions as displayed on a student's user interface display is shown in Fig. 5. While the analysis unit 92 is shown in Fig. 1 as part of the ground-based devices, the analysis unit 92 could also be implemented in an airborne device in order to analyse the training performance in real time and to make immediate suggestions for further training sessions during the flight. Fig. 4 shows a block diagram for a performance of a ground-based analysis unit 92 as post-flight training analyser and Fig. 8 shows a block diagram for a performance of the analysis unit 92 during the training flight for changing training items during the flight in response to an analysis of the student's behaviour.

In order to analyse the training, the analysis unit uses the flight and student monitoring data recorded during the flight.

The flight school accounting unit 96 is configured:
- for interfacing with existing accounting systems or
- as stand-alone flight school accounting.

The flight school training records unit 98 is configured:
- to provide training records (data and analysis) for each student
- for reporting to authorities
- for providing statistics.

The fleet management unit 100 is configured:
- to manage operation times (engines, oil, 50h, 100h, ...)
- to provide a defect list
- to schedule down times
- for automated communication with maintenance facilities.

The training and maintenance scheduler 102 is configured for:
- scheduling student/instructors/airplanes/missions
- provide preferences (preferred airplanes, instructions)
- provide rotation of resources.

The ground-based data recorder 104 is configured:
- for data collection
- as interface to external sensors (AHRS, barometers, etc.)
- as interface to onboard systems (e.g. ARINC 429)
- for XM-weather capability.

Although the flight school equipment 10 is described above as acquiring data during real flights, it should be noted that the flight school equipment 10 may also comprise a flight simulator 106 for conducting simulated training flights and for acquiring simulator flight data instead or in addition to real flight data. For example. the flight simulator 106 may provide a virtual reality environment similar to the aircraft cockpit as shown in Fig. 2. In principle, any function as described above with reference to a real training flight in a real aircraft 16 could also be performed in the flight simulator 106.

Further, while the above mentioned embodiments have been described with reference to only one aircraft 16, it should be noted that the flight school equipment 10 may comprise several of the aircraft 16, also of different type. Further, it should be noted that, of course, a plurality of students and trainers (or instructors) may use the system in parallel. In fact, this system is advantageous for managing a larger flight school that trains many students in parallel with many instructors.

In the following preferred uses of the flight school equipment 10 are described in more detail with reference to the accompanying figures.

A first aspect of using the flight school equipment 10 refers to a structured data-oriented assisted flight training. For testing this (and all of the further aspects described below), a demonstration platform for an avionic suite capable to provide in-flight, real-time flight training support has been developed. The elements thereof are shown in fig. 1.

During flight training, several components act together during the process of learning: a) actual flight training in the aircraft; b) theoretical lessons (web based training, class room training); c) simulator training. The knowledge about executed lessons, their success, the consistency between level of practical and theoretical training progress and the storage of the training itself is not done currently and subsequently cannot be used for debriefing and analysis of lessons as well as no holistic assessment of the progress of the student is feasible.

In order to achieve this, the flight school equipment 10 uses a cloud-/database oriented data-structure that structures and stores the information regarding the progress of the student 44 in the course of flight training. This includes, but is not limited to: practical training task, practical training results (data and grading); consumed theoretical training, theoretical (stage-) test results, simulator training tasks and recorded simulations.

This data is available for analysis and can be used for (non-conclusive): progress analysis; student behaviour analysis; lesson grading, and recommendation of future training steps.

With this method, gathering and organizing data in the described structure enables structured use in order to propose and design specific training contents and schedules. This will allow training to be better adjusted to student's abilities and characteristics, using machine learning and other cognitive functions. In addition, the training data, if collected for multiple students, can be used for overarching statistics and learning. Learning principles can be applied that aim at understanding student behaviour in various levels for various groups, such as students from one flight school, for one specific license type, for one or more specific countries or cultural regions etc. Training will be more efficient and subsequently more cost effective. It will also be better tailored to the student, i.e. personally more satisfying.

Fig. 1 shows the different hardware and software components that are attached to the central cloud. Some of these components are used in flight whereas others are ground based. The central element is the Data Recorder 28. This device is attached to the aircraft sensors and records all telemetry data. When on ground - after the flight - this data can be uploaded to the cloud and the other components have access to this data.

A second aspect of using the flight school equipment 10 relates to a method for machine assisted flight training, behaviour analysis and automated suggestion of training exercises.

With the flight school equipment 10, a machine-conducted method of recommending flight lessons to new or already active pilots based on a history of flight data recorded in previous flights can be performed. These flight data records can be obtained either from flying a real aircraft 16, or from flying a simulated aircraft 16 in a flight simulation environment - flight simulator 106.

Currently, during the training the flight instructor is responsible to monitor the new pilot behavior and progress, and propose to the new pilot new exercises to improve the pilot's skills. However, this process is far from ideal, as the new pilot does not have a way of reviewing his/her own behavior post-flight, so that there is no correlation in his/her mind on what was executed wrong, and what should be improved in future lessons. Also, the instructor might also not notice a smaller deficiency on the pilot's skill while focusing on correcting other issues.

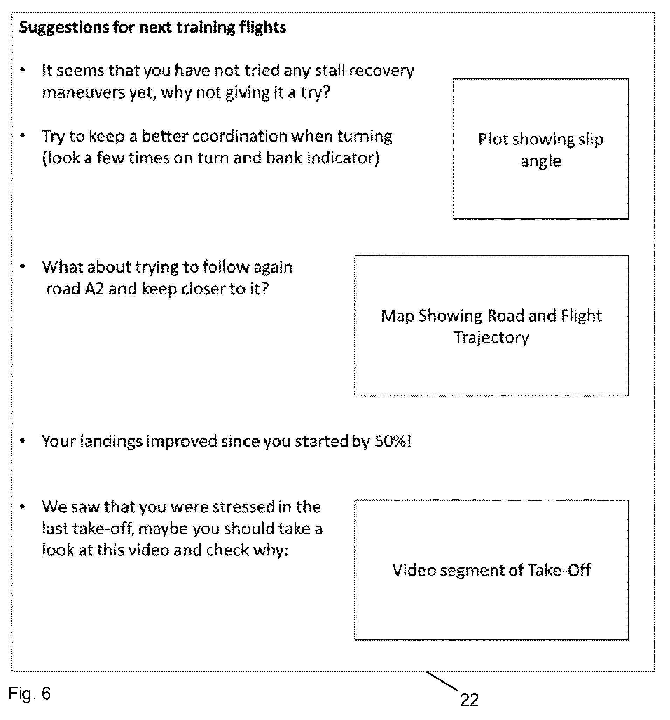

The flight school equipment 10 provides a system that improves on the flight learning experience by recording (see fig. 4), analyzing (see fig. 4 and fig. 5) and suggesting (automatically or via human interaction) new flight training lessons based on previous recorded flight data (see fig. 4 and fig. 6).

This provides a significant improvement on the flight learning experience by recording, analyzing and suggesting (automatically or via human interaction) new flight training lessons based on previous recorded flight data. As result, training flight time can be reduced and resources of the flight school are saved.

According to an advantageous embodiment, the machine-assisted method of suggesting new flight lessons comprises the steps of:
a) Acquiring flight data during one or multiple flight lessons
b) (optional) Augmenting this data with audio and/or video acquired during the flight
c) (optional) Augmenting this data with pilot health monitoring data acquired during the flight
d) Analyzing all the recorded data during or post-flight, classifying each part of the flight accordingly
e) (optional) Giving grades to the pilot behavior based on each predicted maneuver or planned flight
f) Based on the data, identifying which characteristics of the piloting could be improved and suggesting new flight lessons to the pilot and/or instructor
g) (optional) Recording all this information in a secure environment.
h) (optional) Providing access to this data (raw or already classified) to the pilot / instructor(s) / flight school

In step a), the data to be recorded can include aircraft position (e.g. latitude, longitude, altitude), aircraft states (such as true airspeed, indicated airspeed, angle of attack, roll and heading), pilot inputs (such as stick, throttle, flap lever) and any interaction with other aircraft systems and instruments. For example, sensors 38 can be employed to determine various aspects of the aircraft 16. The results of the measurements of the sensors 38 are then collected, preferably in a central processing unit 14, and stored in a storage unit 30.

In step b), video and audio recordings of the flight are made. Regarding the audio and/or video acquisition, a single camera 46/microphone 50 or multiple cameras 46/microphones 50 can be used, installed in multiple positions on the aircraft 16, recording the cabin, the cockpit panel, the pilot and the instructor activities or the exterior of the aircraft 16. A synchronization step between the multiple cameras 46 might be used, either by the means of a specific sound recording (e.g. high frequency sound) or visual display (e.g. color sequence on a screen) produced by one of the devices implemented in this flight school equipment 10. If the camera(s) 46/microphone(s) 50 are all connected to the system of the flight school equipment 10, this synchronization step might not be necessary, if all data is recorded and equipped with timestamps in the central recording unit (data recorder 28). A manual synchronization step might be executed by the operator of the system. An automatic synchronization step might be employed to correlate all flight data, video data and audio data acquired during the flight, using one of the cues depicted in the previous step.

In step c), health monitoring data from sensors such as (but not limited to) heart-rate, galvanic skin response sensors, or eye tracking (either from a stationary or head mounted eye tracking system), head movements (with an appropriate tracking system) can be recorded during the flight.

Augmenting the data as indicated in step b) and/or c) can be made using a data augmenting device 110 configured to synchronize the data as indicated above.

In step d), all data acquired during the flight are analyzed through specialized algorithms, and classified accordingly to the type of maneuver or scenario executed (such as standard traffic pattern, coordinated turn training, stall training, engine-out training). If video and audio data are recorded for the flight, they can also be analyzed, estimating for example where the pilot was looking (outside, cockpit panel, specific instruments) based on algorithms such as eye and body tracking. If health monitoring data is acquired, pilot stress levels and attention levels can be calculated for each flight segment as well.

In step e), grades could be assigned to each of the classified flight segments, according to how well the pilot executed them. These grades could reflect if the maneuver was executed as planned (e.g. flight along reference landmark such as a highway), if aircraft stayed within specified boundaries (e.g. rolling angle within a desired range, aircraft speeds during or after the maneuver within bounds, or minimum altitude gain / loss, among other cases, or turning without side slip). The grades could also reflect how stressed the pilot was during each segment, and if the pilot was paying attention to the right aspects (e.g. for visual flight, focusing outside of the cockpit, or for a coordinated turn, that he checked the turn and slip indicator.

In step f), based on the grades assigned to each identified flight segment, a proposal of new flight lessons and areas to focus on is made. As an example, if it was identified that the pilot was not able to maintain a coordinated turn, a new flight lesson composed of multiple turn exercises could be suggested for future training. Another example would be if, after a stall maneuver, the aircraft lost more altitude than it should. In this case, a new stall training could be suggested. Another example would be that the system identified from the video recording, that the pilot was not checking some of the aircraft instruments as frequently as necessary. A remark would then be made that the new pilot should focus on that aspect throughout future flight lessons.

In step g), all data related to the flight, such as (but not limited to) the flight plan, flight logs, pilot and instructor names and data, pilot stress levels, could be stored in an offline or connected environment, so that all data can be continually reviewed. Also, the progress of the pilot can be derived from all the data stored, and a history of the pilot flight training experience can be provided.

In step h), the pilot could get access to all the recorded training data, or the results of the processed flight/video/audio training reports. This access could be, as an example, provided via an internet-based portal, via a dedicated device, or in printed form. The instructor and the flight school can also have access to the data, for example to account the number of hours flown and charge the pilot for the flight and instruction costs. It could also be used to derive quantitative and qualitative metrics on each instructor behavior, or to review manually a given training session should the need arise.

A third aspect of using the flight school equipment relates to a method for guided on board training.

This aspect relates to a method of recommending flight lessons to new or already active pilots based on a history of flight data recorded in previous flights. These flight data records can be obtained either from flying a real aircraft, or from flying a simulated aircraft in a flight simulation environment.

Currently, during the training the flight instructor is responsible to monitor the new pilot behavior and progress, and propose to the new pilot new exercises to improve the pilot's skills. However, this process is far from ideal, as the new pilot does not have a way of reviewing his/her own behavior post-flight, so that there is no correlation in his/her mind on what was executed wrong, and what should be improved in future lessons. Also, the instructor might also not notice a smaller deficiency on the pilot's skill while focusing on correcting other issues. The flight school equipment provides a system that assists the pilot and the instructor during a flight training lesson by showing what is the current task to be executed, where they are within the training exercise, and what the next steps are.

This system provides a significant improvement on the flight learning experience helping the execution of a flight training exercise with task reminders and explanations on what to do on each step. Hence, training flight time could be reduced and resources of the flight school can be saved.

According to this third aspect, flight school equipment 10 may perform a machine-perfomed method of aiding during a flight lesson comprises of the steps of:
a) Acquiring flight data during the flight lesson
b) Keeping an internal state representation of the flight lesson
c) Correlating the current flight data with this internal state representation, and identifying where in the lesson the pilot is
d) (Optional) Presenting a visual feedback to the pilot the current task/step
e) (Optional) Presenting a visual feedback to the instructor the next task/step and an overview of the flight training history and remaining tasks/steps
f) (Optional) Providing a computer-generated or recorded voice remark of the next task/step

In step a), the data to be recorded can include aircraft position (e.g. latitude, longitude, altitude), aircraft states (such as true airspeed, indicated airspeed, angle of attack, roll and heading), pilot inputs (such as stick, throttle, flap lever) and any interaction with other aircraft systems and instruments. For example, sensors 38 can be employed to determine various aspects of the aircraft. The results of the measurements of the sensors are then collected, preferably in a central processing unit 14, and stored in a storage unit 30.

In step b), the system keeps an internal representation of the flight lesson, such as a predicted flight state history or a set of locations, altitudes, speeds or attitudes that the aircraft has to reach during the lesson.

In step c), the flight data acquired in step a) is correlated to the internal state representation, and the current "position" in the flight lesson is identified (e.g. location/current task)

In step d), an optional visual feedback (e.g. using a heads-up-display, tablet, smartphone, smart-glasses or other forms of displays) is given to the pilot, presenting him/her with the current task to be executed.

In step e), an optimal visual feedback (e.g. using a heads-up-display, tablet, smartphone or other forms of displays) is given to the flight instructor, presenting him/her with a history of how the pilot is going through the instructions and what are the next tasks

In step f), when necessary, the next task is spoken to the pilot via a computer-generated voice or a pre-recorded voice. This can be done via a wired connection to the pilots' headset or via a wireless connection such as Bluetooth.

In the cockpit, a (smart-)phone 60 or AR glasses 74 can be used as head-up display in order to enable a quick glance to next steps in the training scenario. A smart flight training app 82 may be performed on any of the data processing devices 12 used in the cockpit. This training app 82 may be used for briefing, flight and debriefing. Additionally, voice instructions are provided in the headset 70 via Bluetooth. This voice instructions are computer generated by the training app 82 and are used to reminder the pilot (i.e. student 44) and/or instructor (i.e. trainer 68) of what is next. The different components are wirelessly connected.

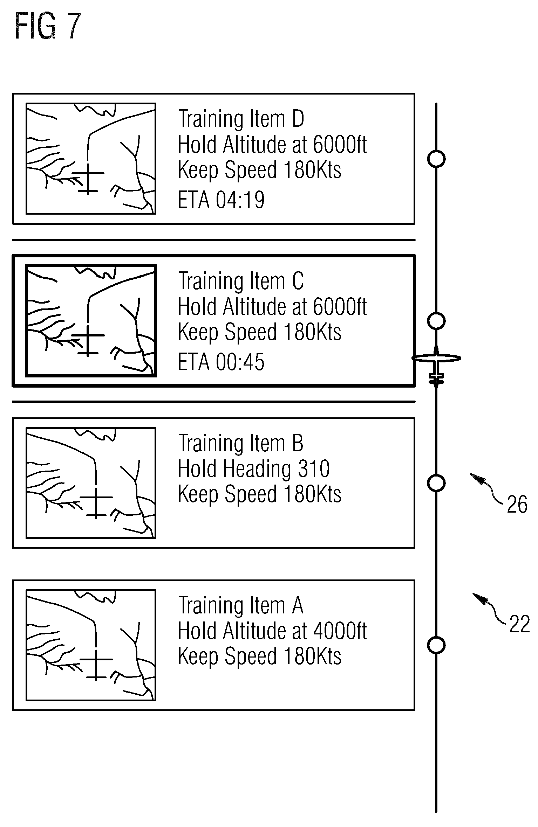

Fig. 2 shows a draft of different vizualisation components (such as smartphones 60, glasses 74 and flight displays). Fig. 3 shows a close-up view of the smart glasses 74 and the headset 70. Fig. 8 shows a flowchart for the training task under this third aspect. And fig. 7 shows a possible HMI for displaying the training items to be conducted during the training flight.

### Reference sign list

- 10: flight school equipment
- 12: data processing device
- 14: central processing unit
- 16: aircraft
- 20: student user interface device
- 22: student user interface
- 24: trainer user interface device
- 26: trainer user interface
- 28: data recorder
- 30: data storage unit
- 32: data communication network
- 34: airplane
- 36: real flight data acquisition device
- 38: (flight) sensor
- 40: aircraft instrument
- 42: student monitoring device
- 44: student
- 46: camera
- 48: video data acquiring unit
- 50: microphone
- 52: audio data acquiring unit
- 54: movement tracking system
- 56: eye tracking system
- 58: health monitoring sensor
- 60: smartphone
- 62: PC (personal computer)
- 64: laptop
- 66: tablet computer
- 68: trainer
- 70: headset
- 72: headphone
- 74: augmented reality glasses
- 76: airborne part network
- 78: ground-based part network
- 80: flight planning app
- 82: flight training app
- 84: flight review preparation and recurrent training app
- 86: data recording app
- 88: cloud database
- 90: training session developer kit
- 92: analysis unit
- 94: training analysis app
- 96: flight school accounting unit
- 98: flight school training records unit
- 100: fleet management unit
- 102: training and maintenance scheduler
- 104: ground-based data recorder
- 106: flight simulator
- 110: data augmenting device

## Claims

1. Flight school equipment (10), comprising:
at least one data processing device (12),
an aircraft (16) for conducting a real training flight wherein a real flight data acquisition device (36) for acquiring real flight data during the real training flight is arranged on the aircraft (16),
at least one student user interface device (20) having a student user interface (22) to be used by a flight student (44) wherein the student user interface device (20) is configured at least for providing information to the student (44),
at least one trainer user interface device (24) having a trainer user interface (26) to be used by a trainer wherein the trainer user interface device (24) is at least configured for providing information to the trainer (68),
at least one student monitoring device (42) for acquiring health and/or movement parameter data of the student (44) during the real training flight,
at least one data recorder (28) for recording real flight data, training data, and
health and/or movement parameter data of the student (44),
a data communication network (32) for connecting the data processing device (12), the real flight data acquisition device (36), the student user interface device (20), the trainer user interface device (24), the student monitoring device (42), and the data recorder (28) at least part time in order to enable a data exchange.

2. Flight school equipment (10) according to claim 1,
**characterized by** a flight simulator (106) for conducting a simulated training flight wherein the flight simulator (106) includes a simulator flight data acquisition device in order to acquire simulator flight data during the simulator training flight wherein the at least one data recorder (28) is configured to record the simulator flight data acquired by the simulator flight data acquisition device.

3. Flight school equipment (10) according to any of the preceding claims,
**characterized in that** a cloud based database (30, 88) is connected to the data communication network (32) in order to store recorded flight data and training data for the student (44).

4. Flight school equipment (10) according to any of the preceding claims,
**characterized by** an analysis unit (92) connected to the data communication network (32) in order to receive the flight data and the health and/or movement parameter data for analysing the behaviour of the student (44) during a training flight, wherein the analysing unit (92) is configured to compare the flight data and the health and/or movement parameter data with predetermined reference data in order to determine a grade for the training success, and is configured to select a next training session among a set of predetermined training sessions in response to the grade for the training success and in response to training data of the student (44) and to provide information about the selected next training session via the student user interface (22) and/or the trainer user interface (26).

5. Flight school equipment according to any of the preceding claims,
**characterized in that** the real flight data acquisition device (36) includes one or several flight sensors (38) chosen from the group of sensors (38) that consists of an aircraft position sensor, an aircraft latitude sensor, an aircraft longitude sensor, an aircraft altitude sensor, an aircraft state sensor, a true airspeed sensor, an indicated airspeed sensor, an angle of attack sensor, a roll sensor, a heading sensor, a pilot input sensor, a stick input sensor, a throttle sensor, a flap lever sensor, a pedal position sensor, a lever position sensor, a sensor for determining an interaction with a flight system, and a sensor for determining an interaction with an aircraft instrument.

6. Flight school equipment (10) according to any of the preceding claims, **characterized in that** the aircraft (16) is equipped with at least one video and/or audio data acquiring unit (48) in order to acquire video data and/or audio data during the real training flight.

7. Flight school equipment according to any of the preceding claims,
**characterized by** a data augmenting device (110) configured to augment the real flight data with simultaneously acquired video and/or audio data and/or health and/or movement parameter data.

8. Flight school equipment according to any of the preceding claims,
**characterized in that** the student monitoring device (42) includes one or several sensors (58) chosen from the group consisting of a heart beat sensor, a galvanic skin response sensor, an eye tracking sensor, a head mounted eye tracking system, a head movement tracking system, a camera (46), a set of cameras (46), a microphone (50) and a body movement tracking system.

9. Flight school equipment according to any of the preceding claims,
**characterized in that** the student user interface device (20) includes a terminal device or several of terminal devices chosen from the group consisting of a smartphone (60), a PDA, a tablet computer (66), a laptop (64), a PC (62), an aircraft integrated communication and/or display device, a head-up display, augmented reality glasses (74), a headset (70), a headphone (72), a loudspeaker, and a microphone (50).

10. Flight school equipment (10) according to any of the preceding claims,
**characterized in that** the trainer user interface device (24) includes a terminal device or several of terminal devices chosen from the group consisting of a smartphone (60), a PDA, a tablet computer (66), a laptop (64), a PC (62), an aircraft integrated communication device, an aircraft integrated display, a head-up display, augmented reality glasses (74), a headset (70), a headphone (72), a loudspeaker, and a microphone (50).

11. Flight school equipment according to any of the preceding claims,
**characterized in that** the data communication network (32) includes an airborne part network (76) for communication during the training flight and a ground-based part network (78) for ground-based communication after the training flight.
